# DEMANDE DE BREVET EUROPEEN

(11) **EP 2 878 386 A1**
(43) Date de publication de la demande: **03.06.2015**
(21) Numéro de dépôt: 14193682.3
(22) Date de dépôt: 18.11.2014
(51) Int. Cl.: B08B 1/00, B08B 1/04, B60S 3/04

(54) **Machine de nettoyage des roues d'un véhicule léger**

(30) Priorité: 02.12.2013 FR 1361913
(71) Demandeur: Marchwiak, Rajmund Andrzej, 91380 Chilly-Mazarin (FR)
(72) Inventeur: Marchwiak, Rajmund Andrzej, 91380 Chilly-Mazarin (FR)
(74) Mandataire: Pontet Allano & Associes

(57) **Abrégé**

La machine de nettoyage des roues (4) d'un véhicule léger (36), comporte au moins deux brosses rotatives (2) globalement cylindriques, comprenant deux axes parallèles disposés horizontalement, prévues pour recevoir entre elles au moins une roue (4). Une motorisation (22) fait tourner les brosses dans des sens de rotation opposés. Les roues (4) reposent sur un appui inférieur (46) se trouvant en dessous des brosses (2). Un moyen est prévu pour l'entraînement en rotation des roues (4) autour de leur axe respectif. Dans un mode de réalisation, l'appui inférieur (46) est un tapis roulant constituant le moyen d'entrainement en rotation des roues (4). Un réceptacle (8) recueille les salissures détachées du tapis (46) par des racleurs (48).

## Description

La présente invention concerne une machine de nettoyage des roues d'un véhicule léger.

Les véhicules légers comportant des roues, en particulier les véhicules transportant des personnes comme des vélos, des poussettes, des fauteuils roulants, des rollers, des civières, ou les véhicules transportant des objets comme des valises à roulettes ou des chariots de courses, peuvent être utilisés à l'extérieur puis remisés ou utilisés à l'intérieur de locaux que l'on souhaite garder propres.

En particulier, on peut faire entrer ce type de véhicules légers dans des locaux privés comme une maison ou l'entrée commune d'un immeuble, ou dans des locaux publics comme un magasin, une crèche ou un hôpital.

Un problème qui se pose est qu'après un roulage à l'extérieur, les roues de ces véhicules peuvent être sales, notamment s'il pleut, ou si le terrain extérieur est poussiéreux, boueux, ou comporte des feuilles mortes s'attachant aux roues.

Pour éviter de salir les locaux, l'utilisateur doit alors effectuer un nettoyage des roues qui peut être long, pénible, salissant et fastidieux, en obligeant l'utilisateur à se pencher pour accéder aux roues. Le nettoyage des roues peut être difficile à effectuer de manière complète et nécessite un matériel (brosse, papier ou chiffon) qui n'est pas toujours disponible. De plus, les salissures détachées des roues doivent être ramassées et évacuées pour conserver les locaux propres.

La présente invention a notamment pour but de réduire ou d'éviter tout ou partie de ces inconvénients en proposant une machine de nettoyage simple et efficace, qui permet d'obtenir facilement et sans effort un bon résultat.

Elle propose à cet effet une machine de nettoyage des roues d'un véhicule léger, caractérisée en ce qu'elle comporte au moins deux brosses rotatives agencées côte à côte pour recevoir au moins une roue dans au moins un intervalle entre les brosses, une motorisation pour l'entraînement en rotation des brosses, un appui inférieur pour l'au moins une roue en cours de nettoyage, ledit appui se trouvant en-dessous des brosses, et un moyen d'entraînement de l'au moins une roue en rotation autour de son axe pendant le nettoyage.

En plaçant au moins une roue du véhicule entre les deux brosses, alors que cette roue est posée sur l'appui inférieur qui règle sa hauteur, et en démarrant la motorisation ainsi que l'entraînement de la roue autour de son axe, on obtient facilement et sans intervention manuelle un nettoyage progressif du pourtour complet de cette roue.

A un instant donné, les brosses nettoient la partie inférieure de la roue. Par la rotation de la roue, toutes les régions du pourtour de la roue se trouvent successivement en partie inférieure et sont alors nettoyées par les brosses.

La machine de nettoyage des roues selon l'invention peut de plus comporter une ou plusieurs des caractéristiques suivantes, qui peuvent être combinées entre elles.

De préférence, les brosses sont de forme cylindrique allongée axialement de façon à brosser simultanément toute la longueur de la partie inférieure de l'au moins une roue. L'opération est ainsi efficace et rapide.

Il est préféré qu'au moins une brosse, de préférence les deux brosses définissant l'intervalle, aient un mouvement dirigé vers le bas dans leur région adjacente à l'intervalle. Ainsi la roue subit une force dirigée vers le bas, appliquant la roue sur l'appui inférieur. En outre, les salissures détachées des roues par la brosse sont entraînées vers le bas au lieu de générer des projections salissantes.

Dans un mode de réalisation, l'appui inférieur comporte des cylindres porteurs horizontaux disposés parallèlement à l'axe de rotation de l'au moins une roue. Le moyen d'entraînement en rotation de l'au moins une roue peut comprendre un moyen de motorisation d'au moins un des cylindres porteurs horizontaux. Mais ces cylindres porteurs peuvent aussi être passifs, en particulier librement rotatifs et l'entraînement en rotation de l'au moins une roue peut être réalisé par ailleurs.

En particulier, mais quel que soit le mode de réalisation de l'appui inférieur, le moyen d'entraînement en rotation peut comprendre un agencement hélicoïdal des poils des brosses.

Dans un autre mode de réalisation de l'appui inférieur, celui-ci comporte une bande continue d'un tapis roulant, et le moyen d'entraînement de l'au moins une roue opère un défilement de la bande suivant un axe longitudinal de la machine.

La machine comporte alors, de préférence, des racleurs disposés en dessous d'un trajet inférieur de la bande, de manière à nettoyer celle-ci lors de son mouvement de circulation.

Pour sa mise en rotation sur elle-même, chaque brosse comporte de préférence, à une extrémité, une poulie ou un système de renvoi d'angle permettant l'entraînement en rotation de la brosse par la motorisation.

La machine comporte avantageusement un bac de récupération disposé en dessous des brosses. Ce bac peut incorporer la surface d'appui inférieur pour l'au moins une roue. Toutefois, de préférence, le bac est distinct de l'appui inférieur, en particulier mais non limitativement situé en-dessous de l'appui inférieur, lequel est ajouré pour laisser passer les salissures vers le bac de récupération et/ou mobile pour convoyer les salissures vers le bac de récupération.

La machine peut comporter un moyen de détection automatique de la présence du véhicule léger, commandant le démarrage de la motorisation. Le moyen de détection automatique peut comporter une détection de la pression de l'au moins une roue sur l'appui inférieur.

Dans un mode de réalisation perfectionné, la machine comporte au moins deux paires de brosses disposées parallèlement, prévues pour recevoir deux roues écartées latéralement d'un même véhicule.

La machine peut même comporter une nappe de brosses parallèles formant entre elles des intervalles de nettoyage pour que des roues écartées latéralement d'un même véhicule puissent être nettoyées simultanément dans deux intervalles de nettoyage précités ayant entre eux un écartement correspondant sensiblement à l'écartement entre roues. Une telle machine peut nettoyer rapidement les roues de tout véhicule susceptible de se présenter.

La machine comporte de préférence des moyens d'auto-positionnement latéral des brosses relativement à l'au moins une roue à nettoyer, en particulier une liberté de mouvement latéral moyennant variation de l'état de contrainte d'au moins un ressort. Ceci permet par exemple aux brosses d'une même paire de se positionner l'une par rapport à l'autre en fonction de l'épaisseur de la roue située entre elles, et/ou à deux paires de brosses de prendre entre elles un écartement correspondant à l'écartement latéral entre deux roues nettoyées simultanément.

Dans un mode de réalisation, au moins une des brosses peut pour son auto-positionnement latéral être montée sur un support oscillant autour d'un axe parallèle à l'axe de brosse.

La machine peut être destinée à être posée sur le sol et comporter une rampe assurant pour l'au moins une roue une jonction entre la surface du sol et une face supérieure comportant un accès aux brosses.

Mais la machine peut aussi, dans un autre mode de réalisation, être destinée à être logée dans une fosse de façon qu'une face supérieure de la machine comportant un accès aux brosses se trouve au niveau du sol.

Une telle machine comporte de préférence un pivot permettant de la fixer au sol, la machine étant extractible de la fosse par rotation autour du pivot.

L'invention sera mieux comprise et d'autres caractéristiques et avantages apparaîtront plus clairement à la lecture de la description ci-après donnée à titre d'exemple, en référence aux dessins annexés où :
- la figure 1 est un schéma en coupe transversale d'un premier mode de réalisation de la machine de nettoyage selon l'invention recevant entre deux brosses une roue d'un véhicule léger ;
- la figure 2 est une vue de côté de la machine de nettoyage de la figure 1 ;
- la figure 3 est un schéma en coupe transversale d'un deuxième mode de réalisation de la machine de nettoyage, comprenant deux paires de brosses pour pouvoir recevoir simultanément deux roues écartées latéralement d'un même véhicule léger ;
- la figure 4 est une vue en perspective d'une brosse et de son montage dans le mode de réalisation de la figure 3 ;
- la figure 5 est une vue en coupe longitudinale d'un troisième mode de réalisation de la machine de nettoyage selon l'invention, conçu pour être posé au sol, et comprenant un entraînement des roues par une bande continue ;
- la figure 6 est une vue de dessus de la machine de la figure 5 ; et
- la figure 7 est une vue en coupe longitudinale d'un quatrième mode de réalisation de la machine de nettoyage, conçu pour être intégré dans le sol.

Il doit être entendu que l'invention s'étend non seulement aux exemples décrits, mais également à toute particularité ou combinaison de particularités de ces exemples, ayant un effet technique, dans la forme décrite ou sous une forme plus générale, dès lors que l'homme de métier en retire ici l'enseignement.

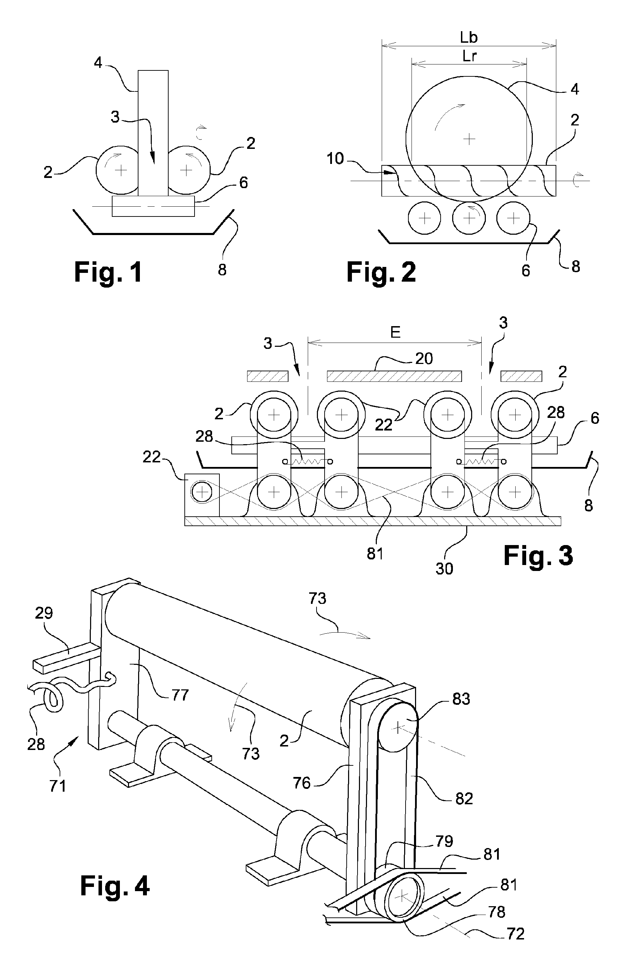

Comme le montrent les figures 1 et 2, la machine présente deux brosses rotatives 2 en forme de rouleaux cylindriques disposés parallèlement entre eux avec leurs axes dans un même plan horizontal, et comportant des poils relativement longs.

Les brosses 2 forment entre elles un intervalle de nettoyage 3 destiné à recevoir une roue 4 à nettoyer. La longueur axiale Lb des brosses 2 (figure 2), et donc de l'intervalle 3 qu'elles forment entre elles, est suffisamment grande, par exemple 30 ou 40 cm, pour nettoyer simultanément toute la partie inférieure de la roue 4 insérée dans l'intervalle 3.

Les brosses 2 sont reliées à une motorisation qui les entraîne en rotation en sens contraires de manière que les deux côtés des brosses adjacents à l'intervalle 3 aient un mouvement dirigé vers le bas.

Typiquement les brosses 2 ont même diamètre et tournent à la même vitesse.

L'écartement entre l'axe des brosses 2 est tel qu'une roue de véhicule 4 peut passer entre les brosses 2 en déformant les poils de brosse. En l'absence de roue, l'intervalle 3 peut être occupé par les poils des deux brosses 2, qui peuvent se rejoindre ou s'interpénétrer.

Les brosses 2 sont disposées au-dessus d'un appui inférieur 6 pour la roue 4 de façon que la partie inférieure de la roue 4 soit située entre les brosses lorsque la roue 4 repose sur l'appui inférieur 6. La longueur Lb de l'intervalle 3 est typiquement supérieure ou égale à la longueur Lr de toute roue 4 susceptible de se présenter, la longueur Lr étant mesurée sensiblement au niveau du dessus de l'intervalle de nettoyage 3 lorsque la roue repose sur l'appui inférieur 6.

Dans l'exemple l'appui inférieur 6 est constitué par des cylindres porteurs horizontaux 6, disposés parallèlement à l'axe de rotation de la roue 4, juste en dessous des brosses 2. Les cylindres porteurs 6 sont libres en rotation, de manière à permettre une rotation de la roue 4 posée sur eux, sans la freiner.

Un bac inférieur de récupération 8 est installé en dessous des brosses 2, afin de les couvrir complètement par en-dessous. Le bac 8 est également situé en-dessous de l'appui inférieur 6.

Des moyens sont prévus pour provoquer la rotation de la roue 4 pendant qu'elle est insérée dans l'intervalle 3 entre les brosses 2. Dans l'exemple, chaque brosse 2 comporte un moyen d'entraînement en rotation de la roue 4, comprenant une disposition hélicoïdale particulière des poils 10 le long de sa forme cylindrique. Cette disposition peut être une rangée hélicoïdale de poils plus longs, ou une rainure hélicoïdale formée par une absence de poils. La machine de nettoyage est symétrique par rapport au plan médian vertical passant entre les deux brosses 2, la disposition hélicoïdale de chaque brosse est inversée par rapport à l'autre.

Le fonctionnement de la machine de nettoyage est le suivant. L'utilisateur fait avancer (ou reculer) la roue 4 de son véhicule léger entre les deux brosses 2 de la machine de nettoyage. La roue 4 vient en appui sur au moins un cylindre porteur 6 formant un appui inférieur.

La rotation des brosses 2 est ensuite démarrée, soit par un moyen de commande à la disposition de l'utilisateur, typiquement un bouton actionné avec le pied de l'utilisateur, soit automatiquement avec par exemple un capteur optique de présence de la roue 4 ou du véhicule, ou un capteur de la pression appliquée sur les cylindres porteurs 6.

Les deux brosses 2 tournent alors en sens opposés, leurs faces en regard ayant un mouvement dirigé vers le bas ce qui applique sur la roue 4 une légère force qui maintient cette roue en appui sur les cylindres porteurs 6, et évite que la roue tende à être éjectée des brosses vers le haut.

Grâce au sens de rotation des brosses 2, les salissures détachées de la roue 4 par les brosses 2 sont projetées vers le bas dans le bac de récupération 8. Les cylindres porteurs 6 sont écartés les uns des autres pour permettre le passage des salissures de la roue 4 jusqu'au bac 8.

En même temps la disposition hélicoïdale particulière des poils 10 venant régulièrement frotter sur la roue 4 qui est libre en rotation autour de son axe, génère sur la roue 4 une force de frottement ayant une composante circonférentielle relativement à la roue 4, ce qui l'entraîne en rotation.

On obtient alors un brossage complet et régulier du pourtour de la roue 4. Ce brossage ainsi que la rotation de la roue 4 continuent tant que la motorisation est en marche.

La durée de fonctionnement peut être commandée par l'utilisateur qui estime que la roue 4 est bien nettoyée, ou par un automatisme comme une temporisation qui arrête automatiquement la rotation des brosses après un temps prédéterminé. Si un capteur de présence a démarré la machine de nettoyage, son arrêt peut se faire automatiquement quand l'utilisateur déplace son véhicule de façon à extraire la roue 4 d'entre les brosses 2, ce qui met fin à l'excitation du capteur ayant détecté cette présence.

On peut en particulier utiliser cette machine comportant une seule paire de brosses 2, pour nettoyer individuellement une roue d'un véhicule léger comme un vélo, en particulier un vélo tout-terrain dont les roues peuvent être fortement salies. Pour cela l'utilisateur dispose par exemple d'abord la roue avant dans la machine afin de la nettoyer, puis ensuite avance le vélo pour nettoyer la roue arrière.

En variante, un autre moyen d'entraînement en rotation des roues 4 comporte une motorisation des cylindres porteurs 6 recevant l'appui des roues. Pour cela on utilise avantageusement une transmission reliant les cylindres porteurs 6 à la motorisation des brosses 2, de manière à obtenir simultanément une rotation des brosses 2 et des cylindres 6.

La machine de nettoyage des figures 3 et 4 ne sera décrite que pour ses différences par rapport à celle des figures 1 et 2. La machine de nettoyage comprend deux paires de brosses parallèles 2, comportant entre les deux plans médians verticaux de chaque paire un écartement latéral E, qui correspond à l'écartement typique entre les deux roues latérales d'un véhicule léger comme une poussette, un chariot ou un fauteuil roulant. Les brosses peuvent être analogues à celles de l'exemple des figures 1 et 2.

La machine comprend des moyens d'auto-positionnement latéral des brosses 2. Plus particulièrement, les brosses 2 sont chacune montée sur un support 71 oscillant relativement à un socle 30 de la machine autour d'un axe 72 parallèle à l'axe de la brosse, et écarté de celui-ci. Ainsi, les brosses se déplacent latéralement comme indiqué par les flèches 73 à la figure 4 lorsque le support 71 oscille.

Les deux supports 71 des brosses 2 d'une même paire sont reliés entre eux par un ressort de traction 28 qui tend à rapprocher les deux brosses 2 l'une de l'autre. Une butée 29 portée par un support 71 limite le déplacement des deux brosses 2 de la paire en s'appuyant sur l'autre support 71 lorsque l'état de rapprochement maximal est atteint.

Chaque support 71 est en forme de U comprenant une partie centrale 74 s'étendant selon l'axe 72 en-dessous du bac 8, et deux bras 76, 77 portant chacun un palier pour une extrémité respective de la brosse 2.

Le moyen d'auto-positionnement permet notamment aux brosses 2 d'une paire de se positionner automatiquement l'une par rapport à l'autre en fonction de l'épaisseur de la roue placée entre elles, la tension du ressort 28 variant de façon correspondante. Il permet également à chaque paire de brosses de se déplacer latéralement de façon assez libre. Ainsi, l'écartement E entre les deux plans médians s'adapte à l'écartement entre les roues du véhicule, à l'intérieur d'une certaine gamme d'écartements pour laquelle la machine est conçue.

Pour la motorisation des brosses, on peut prévoir un moteur sur chaque support pour entraîner la brosse correspondante. Dans l'exemple représenté, on a cependant prévu une motorisation commune 22 entraînant les quatre brosses 2 par l'intermédiaire d'une courroie primaire commune 81. L'un des bras 76 de chaque support 71 porte deux poulies 78, 79 solidaires l'une de l'autre et librement rotatives par rapport au bras 76 autour de l'axe 72. L'une 78 des poulies est en relation d'entraînement avec la courroie primaire 81. La courroie 81 passe alternativement en dessus de la poulie 78 d'un support et en dessous de la suivante et ainsi de suite pour que chaque brosse 2 tournent en sens inverse de ses voisines. L'autre 79 des poulies est en relation d'entraînement par l'intermédiaire d'une courroie secondaire 82 avec une poulie menée 83 solidaire en rotation de la brosse 2.

Avec le mode d'entraînement des brosses décrit, la force transmise par les courroies secondaires 82 tend à faire pivoter les supports 71 dans le sens du rapprochement mutuel des brosses 2 de chaque paire. Il en résulte une force d'application de chaque brosse sur la roue à nettoyer. Les ressorts 28 servent donc surtout à appliquer les brosses sur les roues avant le démarrage de la motorisation 22, pour amorcer la mise en charge des moteurs et donc l'apparition de la force d'application précitée générée par la tension des courroies 82.

Une grille de protection 20 posée à plat au-dessus des brosses 2, comporte au-dessus de l'intervalle 3 entre les deux brosses de chaque paire, une fente ne laissant les roues ou les roulettes accéder aux brosses que dans cet intervalle. La grille de protection 20 protège le reste de la surface. On empêche ainsi, également, la plupart des corps étrangers de pénétrer dans la machine sauf s'ils sont suffisamment petits pour tomber dans le bac de récupération 8. On prévient également le risque de blessure en limitant tout accès à l'intérieur de la machine.

Des cylindres porteurs 6 disposés juste en dessous des brosses 2, s'étendent sur toute la largeur de la machine de nettoyage de manière à former simultanément un appui en dessous des deux paires de brosses. Le bac de récupération 8 disposé en dessous des cylindres porteurs 6, couvre par en-dessous l'ensemble des brosses 2.

Un utilisateur peut alors avancer un véhicule et descendre les deux roues de chaque côté entre chaque paire de rouleaux 2, ces roues venant en appui sur les cylindres porteurs 6. Les brosses 2 s'auto positionnent latéralement comme décrit. Le démarrage de la motorisation 22 entraînant simultanément les brosses 2, peut être manuel ou automatique comme décrit en référence aux figures 1 et 2.

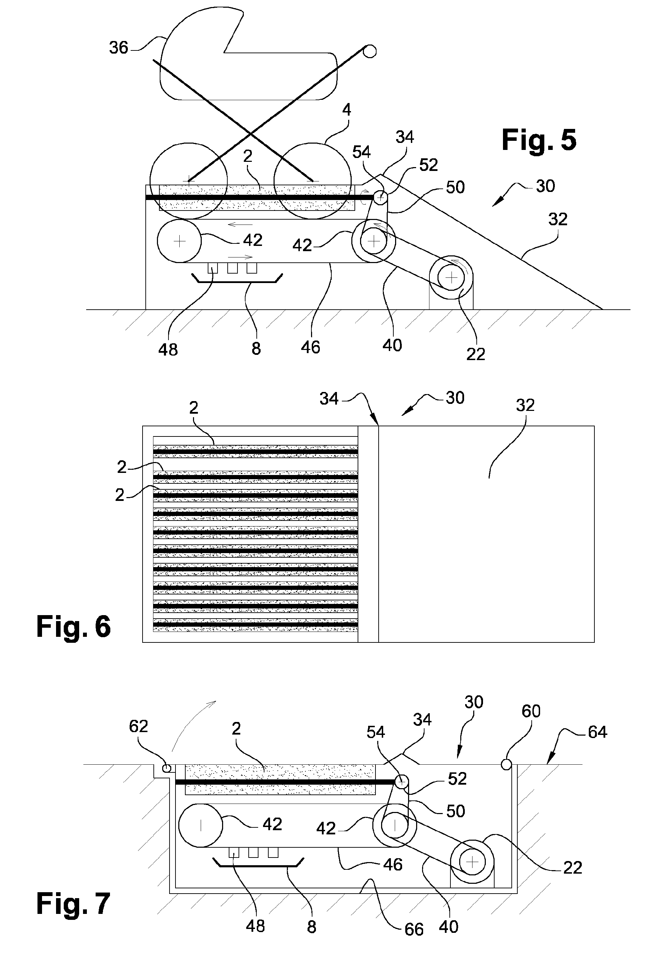

Dans le mode de réalisation des figures 5 et 6, la machine de nettoyage est conçue pour nettoyer simultanément les quatre roues d'un véhicule léger, dans l'exemple une poussette d'enfant 36. Les brosses 2 sont suffisamment longues pour qu'un intervalle de nettoyage entre brosses puisse recevoir deux roues alignées d'un même côté de véhicule.

Suivant une autre particularité, la machine comprend un socle 30 posé sur le sol, équipé d'une rampe avant 32 permettant de monter une poussette 36 ou autre véhicule léger. Une fois passé un rebord 34 en haut de la rampe 32, permettant de caler cette poussette 36 en évitant un retour en arrière, les roues 4 descendent ensuite entre deux paires de brosses 2.

Avantageusement la machine de nettoyage comporte une série de brosses 2 régulièrement espacées, présentées sur la vue de dessus. Chacune des brosses 2 est légèrement mobile latéralement moyennant variation de l'état de contrainte d'un ressort, de manière à permettre systématiquement la descente des roues 4 entre deux brosses quel que soit l'écartement latéral des roues de la poussette 36.

Les roues 4 intercalées entre deux brosses 2 prennent appui sur une bande continue 46 d'un tapis roulant disposé juste en dessous des brosses. La bande 46 défile suivant l'axe longitudinal de la machine de nettoyage. La bande 46 est tendue entre deux tambours 42 ayant chacun un axe transversal, et circule autour de ces tambours. L'un des tambours, dans l'exemple le tambour avant, est entraîné par une première courroie 40 liée à la motorisation 22.

Une deuxième courroie 50 relie le tambour motorisé 42 à une poulie 52 fixée sur un arbre transversal 54 disposé juste en extrémité, ici juste en extrémité avant, de l'axe des brosses 2. L'arbre 54 entraîne une série de pignons coniques formant des renvois d'angle à 90°, qui permettent à chacun d'entraîner une des brosses 2. De cette manière, la motorisation 22 entraîne simultanément toutes les brosses 2 ainsi que la bande 46. Les pignons coniques portés par l'arbre 54 sont entraînés en rotation par l'arbre 54 mais coulissants sur celui-ci grâce à une liaison par cannelures entre l'arbre et chaque pignon. Ceci permet aux renvois d'angle de suivre le mouvement d'auto-positionnement latéral des brosses. De manière non représentée, chaque brosse peut être portée par un support oscillant tel que 71 (figure 4) mais dont les bras 76 sont télescopiques ou en deux parties articulées pour que la trajectoire de l'axe de brosse soit linéaire, le long de l'arbre 54, et non pas curviligne autour d'un axe 72 comme dans le mode de réalisation des figures 3 et 4. L'extrémité des brosses opposée à l'arbre 54 peut-être également guidée en translation parallèlement à l'arbre 54.

En variante, l'entraînement de chacune des brosses 2 à partir de l'arbre transversal 54 peut comporter un système de vis sans fin qui réalise aussi un renvoi d'angle pour la rotation des brosses. Dans ce cas, un mouvement d'auto-positionnement latéral d'une brosse s'accompagne d'une légère rotation de la brosse sur elle-même ce qui n'est pas gênant.

Des racleurs 48 sont disposés en dessous du trajet inférieur de la bande 46, de manière à racler cette bande lors de sa circulation autour des tambours 42. Les racleurs 48 nettoient la bande des salissures déposées par les roues 4, et les font tomber dans le bac de récupération 8 qui se trouve juste en dessous des racleurs 48.

Avantageusement, les brosses 2 comportent aussi un moyen de nettoyage des brosses, comprenant par exemple des racleurs qui frottent sur les poils des brosses à chaque tour, afin de faire tomber les saletés décrochées des roues 4 dans le bac de récupération 8.

Un dispositif de détection de la présence de la poussette 36 commandant le démarrage automatique de la motorisation 22, peut comporter en particulier un capteur de tension de la bande 46, qui détecte une pression sur cette bande venant du poids de la poussette.

On réalise ainsi une machine entièrement automatique, qui permet de laisser la poussette 36 en position pendant le nettoyage sans avoir à intervenir.

On notera que l'insertion des roues 4 entre deux brosses 2 disposées latéralement de chaque côté de ces roues, permet en particulier de nettoyer soigneusement les côtés des roues, et pas seulement la bande de roulement périphérique qui est en appui sur le sol.

En complément, le socle 30 peut comporter une pente arrière permettant à l'utilisateur de retirer la poussette 36 du côté arrière de la machine de nettoyage, ce qui permet de disposer la machine par exemple dans une entrée de bâtiment, avec un passage des poussettes qui traverse ce poste de nettoyage en venant de l'avant pour partir vers l'arrière.

Avantageusement le bac de récupération 8 est facilement accessible par un côté du socle 30, en le faisant coulisser latéralement comme un tiroir, de manière à le vider des saletés.

Le mode de réalisation de la figure 7 diffère de celui de la figure 5 par le socle 30 qui est ici entièrement intégré dans une fosse 66 creusée dans le sol, de sorte qu'une face supérieure de la machine soit alignée avec le niveau du sol 64. Le dessus de ce socle 30 comporte le rebord 34 disposé juste en avant des brosses 2, afin de maintenir la poussette qui vient sur les brosses.

Le socle 30 est fixé au sol par un pivot 60 disposé le long de l'un de ses bords supérieurs, ici le bord supérieur avant. L'utilisateur peut extraire la machine de la fosse 66 en la soulevant par rotation autour du pivot 60, en saisissant une poignée de préhension 62 disposée au bord supérieur opposé au pivot. On peut ajouter en option un ressort permettant de compenser au moins partiellement le poids de la machine de nettoyage afin de faciliter son soulèvement, comportant par exemple un vérin à gaz qui équilibre ce poids

On réalise ainsi de manière simple une machine de nettoyage qui est facile d'accès car restant au niveau du sol 64, et qui est très peu encombrante. La poignée de préhension 62 ainsi que le pivot 60 facilitent l'ouverture de la machine, afin d'assurer notamment son nettoyage.

Bien entendu, l'invention n'est pas limitée aux exemples décrits et représentés.

Dans un mode de réalisation à deux paires de brosses pour nettoyer simultanément des roues latérales situées des deux côtés du véhicule, par exemple comme décrit en référence à la Figure 3 on peut prévoir que l'écartement tel que E est réglable, une des paires de brosses étant par exemple montée sur un chariot réglable latéralement.

Pour l'auto-positionnement latéral on peut prévoir que deux brosses montées sur support mobile, en particulier oscillant, notamment les deux brosses d'une même paire, sont reliées en rotation par une courroie qui est entraînée par un moteur fixé au bâti ou sur l'un des supports oscillants. La courroie passe sur un galet tendeur couplé à un contact de mise en route automatique. Lorsqu'une roue s'insère entre les deux brosses, elle écarte les brosses, ce qui déplace le galet tendeur, lequel déclenche de ce fait la mise en action des moteurs et la rotation des brosses.

Le système d'auto-positionnement des figures 3 et 4 est compatible dans son principe avec les autres modes de réalisation décrits.

## Revendications

1. Machine de nettoyage des roues d'un véhicule léger (36), **caractérisée en ce qu'**elle comporte au moins deux brosses rotatives (2) agencées côte à côte pour recevoir au moins une roue (4) dans au moins un intervalle (3) entre les brosses, une motorisation (22) pour l'entraînement en rotation des brosses, un appui inférieur (6, 46) pour l'au moins une roue (4) en cours de nettoyage, ledit appui (6, 46) se trouvant en-dessous des brosses (2), et un moyen (10, 46) d'entraînement de l'au moins une roue (4) en rotation autour de son axe pendant le nettoyage.

2. Machine selon la revendication 1, **caractérisée en ce que** les brosses (2) sont de forme cylindrique allongée axialement de façon à brosser simultanément toute la longueur (Lr) de la partie inférieure de l'au moins une roue (4).

3. Machine selon la revendication 1 oui 2, **caractérisée en ce qu'**au moins une brosse (2), de préférence les deux brosses (2) définissant l'intervalle (3), ont un mouvement dirigé vers le bas dans leur région adjacente à l'intervalle (3).

4. Machine selon l'une quelconque des revendications 1 à 3, **caractérisée en ce que** l'appui inférieur (6) comporte des cylindres porteurs horizontaux (6) disposés parallèlement à l'axe de rotation de l'au moins une roue.

5. Machine selon l'une quelconque des revendications 1 à 4, **caractérisée en ce que** le moyen d'entraînement en rotation comprend un agencement hélicoïdal (10) des poils des brosses (2).

6. Machine selon l'une quelconque des revendications 1 à 3, **caractérisée en ce que** l'appui inférieur (6) comporte une bande continue (46) d'un tapis roulant, et le moyen d'entraînement de l'au moins une roue opère un défilement de la bande (46) suivant un axe longitudinal de la machine.

7. Machine selon la revendication 6, **caractérisée en ce qu'**elle comporte des racleurs (48) disposés en dessous d'un trajet inférieur de la bande (46), de manière à nettoyer celle-ci lors de son mouvement de circulation.

8. Machine selon l'une quelconque des revendications précédentes, **caractérisée en ce que** chaque brosse (2) comporte à une extrémité une poulie (83) ou un système de renvoi d'angle, permettant l'entraînement par la motorisation (22).

9. Machine selon l'une quelconque des revendications précédentes, **caractérisée en ce qu'**elle comporte un bac de récupération (8) disposé en dessous des brosses (2).

10. Machine selon l'une quelconque des revendications précédentes, **caractérisée en ce qu'**elle comporte un moyen de détection automatique de la présence du véhicule léger (36), commandant le démarrage de la motorisation (22).

11. Machine selon la revendication 10, **caractérisée en ce que** le moyen de détection automatique comporte une détection de la pression de l'au moins une roue (4) sur l'appui inférieur (6, 46).

12. Machine selon l'une quelconque des revendications précédentes, **caractérisée en ce qu'**elle comporte au moins deux paires de brosses (2) disposées parallèlement, prévues pour recevoir deux roues (4) écartées latéralement d'un même véhicule (36).

13. Machine selon l'une quelconque des revendications 1 à 11, **caractérisée en ce qu'**elle comporte une nappe de brosses parallèles formant entre elles des intervalles de nettoyage pour que des roues écartées latéralement d'un même véhicule puissent être nettoyées simultanément dans deux intervalles de nettoyage précités ayant entre eux un écartement correspondant sensiblement à l'écartement entre roues.

14. Machine selon l'une quelconque des revendications précédentes, **caractérisée en ce qu'**elle comporte des moyens d'auto-positionnement latéral des brosses (2) relativement à la roue (4) à nettoyer, en particulier une liberté de mouvement latéral moyennant variation de l'état de contrainte d'au moins un ressort (28).

15. machine selon la revendication de 14, **caractérisée en ce que** pour son auto-positionnement au moins l'une des brosses (2) est montée sur un support (71) oscillant autour d'un axe (72) parallèle à l'axe de brosse et écarté de l'axe de brosse.

16. Machine selon l'une quelconque des revendications précédentes, **caractérisé en ce qu'**elle est destinée à être posée sur le sol et comporte une rampe (32) assurant pour l'au moins une roue (4) une jonction entre la surface du sol et une face supérieure comportant un accès aux brosses (2).

17. Machine selon l'une quelconque des revendications 1 à 16, **caractérisée en ce qu'**elle est destinée à être logée dans une fosse (66) de façon qu'une face supérieure de la machine comportant un accès aux brosses (2) se trouve au niveau du sol (64).

18. Machine selon la revendication 17, **caractérisée en ce qu'**elle comporte un pivot (60) permettant de la fixer au sol, la machine étant extractible de la fosse par rotation autour du pivot.
